# EUROPÄISCHE PATENTSCHRIFT

(11) **EP 3 194 238 B1**
(45) Veröffentlichungstag und Bekanntmachung des Hinweises auf die Patenterteilung: **25.08.2021**
(21) Anmeldenummer: 15778217.8
(22) Anmeldetag: 16.09.2015
(51) Int. Cl.: B61G 5/10, H02G 3/32, H02G 11/00

(54) **WAGENÜBERGANGSSYSTEM ZUR FÜHRUNG WENIGSTENS EINES VERSORGUNGSKABELS**
CAR CONNECTION SYSTEM FOR GUIDING AT LEAST ONE SUPPLY CABLE
SYSTÈME DE JONCTION ENTRE VOITURES POUR LE PASSAGE D'AU MOINS UN CÂBLE D'ALIMENTATION

(30) Priorität: 19.09.2014 DE 102014218943
(43) Veröffentlichungstag der Anmeldung: 26.07.2017
(73) Patentinhaber: LEONI Kabel GmbH, 91154 Roth (DE)
(72) Erfinder: RITTHAMMER, Marcus, 91166 Georgensgmünd (DE)
(74) Vertreter: FDST Patentanwälte
(86) Internationale Anmeldenummer: PCT/EP2015/071194
(87) Internationale Veröffentlichungsnummer: WO 2016/042016

(56) Entgegenhaltungen:
- CN-Y- 201 423 930
- DE-C1- 19 614 060
- DE-C2- 19 614 427
- FR-A1- 2 713 183
- None

## Beschreibung

Die Erfindung betrifft ein Wagenübergangssystem zur Führung wenigstens eines Versorgungskabels zwischen zwei Wagen, mit einem Tragteil, zur Halterung des Versorgungskabels.

Ein solches Wagenübergangssystem ist beispielsweise in der FR 2 713 183 beschrieben.

Insbesondere im Bahnbereich werden zur Überführung von Versorgungskabeln zwischen zwei Wagen eines Zuges sogenannte Wagenübergangssysteme verwendet, die das Versorgungskabel von einem zum anderen Wagen führen. Das Versorgungskabel ist hierbei beispielsweise ein Kabel zur Leistungsübertragung, insbesondere im Kilovoltbereich oder ein Daten- oder Signalkabel. Dabei ist es prinzipiell auch möglich, dass mittels eines Wagenübergangssystems mehrere Versorgungskabel geführt werden.

Ein Wagenübergangssystem stellt weiterhin auch eine flexible Verbindung derart dar, dass eine relative Bewegung der beiden Wagen zueinander ermöglicht wird. Beispielsweise ist es generell bekannt, die beiden Kabelenden eines Versorgungskabels jeweils mittels eines Kabelschuhs an einem Endverschluss zu befestigen. Das Versorgungskabel ist dabei üblicherweise biegeflexibel und ermöglicht eine relative Bewegung der jeweils auf einem Wagen fest montierten Endverschlüsse.

Nachteilig ist bei dieser Ausführung jedoch, dass am jeweiligen Kabelschuh, das heißt an den Anschlusspunkten des Versorgungskabels im Betrieb zusätzlich möglicherweise mechanische Kräfte auftreten, durch welche sich die Verbindung lockert oder sogar löst oder das Versorgungskabel beschädigt wird und bricht. Die mechanische Beanspruchung wirkt hier insbesondere direkt auf das Versorgungskabel sowie insbesondere auf die Anschlusspunkte. Um die elektrische Anbindung des Versorgungskabels über die Anschlusspunkte von der mechanischen Belastung zu trennen werden daher oft sogenannte Klemmteile verwendet, in denen das Versorgungskabel derart mechanisch fest fixiert wird, dass die Anschlusspunkte im Betrieb gar nicht oder lediglich geringfügig belastet werden.

So ist beispielsweise in der DE 196 14 060 C1 eine elektrische Kupplungseinrichtung gezeigt, für Fahrzeuge mit zwei relativ zueinander beweglichen Fahrzeugteilen. Dabei ist ein Versorgungskabel, dort als elastisches Kupplungselement bezeichnet, zunächst mittels eines Klemmteils fixiert. Das Klemmteil ist wiederum mit einem Ausleger verbunden, der schwenkbar an einem als Isolator ausgebildeten Tragteil montiert ist. Über dieses Tragteil erfolgt dann eine mechanische Anbindung an eines der Fahrzeugteile. Mit dem Tragteil fest verbunden ist zudem ein elektrischer Anschluss, an dem das Versorgungskabel mittels eines Kabelschuhs elektrisch angeschlossen ist. An den elektrischen Anschluss ist dann wiederum ein entsprechender Endverschluss anschließbar, zur elektrischen Anbindung des Versorgungskabels an das Fahrzeugteil.

In der FR 2 713 183 ist eine Vorrichtung dargestellt, die eine flexible Verbindung in einer horizontalen Ebene ermöglicht und dazu einen Teleskoparm umfasst, der an dessen beiden Enden jeweils über ein Gelenk an einem Isolator angebracht ist. Die Führung eines Versorgungskabels erfolgt hier mittels eines Führungsmittels, das etwa mittig am Teleskoparm angebracht ist und als mechanische Stabilisierung des Versorgungskabels dient. Dazu ist dieses als O-Ring ausgeführt, der einen Innendurchmesser aufweist, welcher größer ist als der Durchmesser des Versorgungskabels, um eine relative Verschiebung desselben zum Führungsmittel und damit zum Teleskoparm zu ermöglichen. Weiterhin weisen die Gelenke jeweils eine mit einem jeweiligen Isolator starr verbundene Platte auf, an die das Versorgungskabel elektrisch angeschlossen ist.

In der DE 196 14 427 C2 ist weiterhin ein Koppelverbinder mit einer Teleskopstange beschrieben.

In der CN 2014 23 930 Y wird ein Wagenübergangssystem beschrieben, mit einem Spiralkabel, einer Klemme, einer Endplatte und einer Zwischenplatte. Das Spiralkabel ist an der Klemme befestigt und ein Ende des Spiralkabels ist über Kabelverbinder mit der Endplatte verbunden. Die Zwischenplatte verbindet die Klemme und die Endplatte.

Der Erfindung liegt die Aufgabe zugrunde, ein einfacheres und gleichzeitig sichereres Wagenübergangssystem zur Führung eines Versorgungskabels anzugeben. Dabei wird unter einfacher insbesondere ein vereinfachter konstruktiver Aufwand verstanden und unter sicherer insbesondere eine mechanische Entlastung der elektrischen Anschlusspunkte des Versorgungskabels. Desweiteren soll das Wagenübergangssystem möglichst kostengünstig in der Fertigung sein.

Die Aufgabe wird erfindungsgemäß gelöst durch ein Wagenübergangssystem mit den Merkmalen des Anspruchs 1. Vorteilhafte Ausgestaltungen, Weiterbildungen und Varianten sind Gegenstand der Unteransprüche.

Das Wagenübergangssystem dient zur Führung wenigstens eines Versorgungskabels zwischen zwei Wagen, beispielsweise eines Zuges. Zur Halterung des Versorgungskabels umfasst das Wagenübergangssystem ein Tragteil, das zudem einen separaten Anschlusspunkt aufweist, an dem das Versorgungskabel elektrisch angeschlossen ist. Desweiteren ist das Tragteil an einem Endverschluss befestigt, zur elektrischen Anbindung des Versorgungskabels an einen der Wagen sowie auch zur mechanischen Anbindung des Klemmteils und des Tragteils an diesen Wagen. Das Versorgungskabel ist als Spiralkabel ausgebildet und erstreckt sich helixartig um eine Kabellängsachse herum. Weiterhin ist am Tragteil das Klemmteil befestigt, zur Zugentlastung und zur mechanischen Halterung des Versorgungskabels. Das Tragteil ist weiterhin starr ausgeführt, d.h. weist keine zueinander beweglichen Teile auf.

Von besonderer Bedeutung ist zum Einen, dass sowohl die mechanische als auch die elektrische Schnittstelle zum jeweiligen Wagen über das Tragteil erfolgt. Dieses ist hierzu mechanisch sowie elektrisch am Endverschluss angebunden. Über das Tragteil erfolgt daher mit nur einem Bauteil sowohl die elektrische als auch die mechanische Befestigung mittelbar über den Endverschluss. Ein zusätzlicher mechanischer Halter oder ein zusätzliches elektrisches Kontaktelement ist nicht erforderlich und auch nicht vorgesehen.

Von besonderer Bedeutung ist weiterhin, dass gleichzeitig die mechanische Anbindung des Versorgungskabels von der elektrischen Anbindung getrennt ist. Insbesondere erfährt die gegenüber mechanischen Belastungen besonders empfindliche Verbindungsstelle des Versorgungskabels am Anschlusspunkt im Betrieb keine oder lediglich eine geringe Krafteinwirkung. Mögliche auf das Versorgungskabel einwirkende Kräfte werden stattdessen vom Klemmteil aufgenommen. Durch die Befestigung des starren Tragteils am Endverschluss ist also sowohl eine mechanisch als auch eine elektrisch besonders einfache Verbindung mit einem der Wagen ermöglicht. Die insgesamt kombinierte Anbindung über das Tragteil führt zu einer besonders einfachen Ausbildung des Wagenübergangssystems, wobei aufgrund der Trennung von Halterung und elektrischem Anschluss des Versorgungskabels am Tragteil insbesondere der elektrische Anschlusspunkt frei von mechanischer Belastung gehalten wird. Insgesamt wirkt das Tragteil als mechanischer Vermittler zwischen dem Klemmteil und dem Endverschluss, welche nicht direkt miteinander verbunden sind, sondern lediglich indirekt über das Tragteil. Das Tragteil selbst weist hierbei keine zueinander beweglichen Teile auf und ist dadurch mechanisch besonders stabil. Insbesondere ist auch die jeweilige Befestigung am Tragteil starr, sodass auch das Klemmteil und der Endverschluss bezüglich des Tragteils nicht beweglich sind und sich insgesamt eine besonders robuste Anordnung ergibt.

Das Versorgungskabel ist zur Halterung am Tragteil mittelbar befestigt, also am Klemmteil, welches wiederum mechanisch fest und starr mit dem Tragteil verbunden ist. Insbesondere ist das Versorgungskabel an zumindest einem Haltepunkt befestigt, beispielsweise ist ein Abschnitt des Versorgungskabels festgeklemmt oder in einer geeigneten Durchführung oder Ausnehmung fixiert. Das heißt insbesondere: das Versorgungskabel ist mittels des Klemmteils verrutschsicher am Tragteil gehaltert. Auf diese Weise werden auf das Versorgungskabel wirkende Kräfte im Betrieb auf das Klemmteil und das Tragteil weitergeleitet. Auf den zwischen dem eingeklemmten Abschnitt des Versorgungskabels, das heißt dem Haltepunkt und dem Anschlusspunkt liegenden Kabelabschnitt wirken dann vorteilhaft keine Kräfte mehr. Dadurch wirken insbesondere auch keine oder lediglich geringe Kräfte auf den Anschlusspunkt. Im Falle eines helixförmigen Versorgungskabels verteilen sich insbesondere Torsionskräfte vorteilhaft auf die Windungen des Versorgungskabels und wirken nicht auf den Anschlusspunkt. Dabei sind der Haltepunkt und der Anschlusspunkt zwar räumlich getrennt voneinander am Tragteil angeordnet, zweckmäßigerweise jedoch nicht relativ zueinander beweglich. Dadurch werden solche Belastungen, die auf den zwischen den Punkten liegenden Kabelabschnitt sowie den Anschlusspunkt wirken optimal vermieden.

Allgemein ist es bei der Befestigung des Versorgungskabels am separaten Anschlusspunkt aufgrund der verringerten mechanischen Anforderungen zudem möglich, bei der Auswahl der Befestigungsmethode diese vorrangig unter Berücksichtigung der Kosten und / oder des Fertigungsaufwandes auszuwählen; die mechanische Stabilität der Verbindung ist vorteilhaft von nachrangiger Bedeutung.

Das Versorgungskabel ist zudem als Spiralkabel ausgeführt, das eine Mehrzahl von Windungen aufweist. Diese bilden insbesondere eine Helix aus, die sich um die Kabellängsachse herum erstreckt. Jede der Windungen weist dabei bezüglich der Kabellängsachse einen Steigungswinkel auf, auch als Steigung bezeichnet, der vorzugsweise zumindest 60° beträgt und geringer ist als 90°. Durch diese steile Ausbildung des Spiralkabels ergeben sich besonders vorteilhafte mechanische Eigenschaften. Insbesondere verteilt sich eine mechanische Belastung, insbesondere eine Torsion auf mehrere Windungen des Versorgungskabels, wodurch insbesondere auch die auf das Klemmteil wirkende Belastung reduziert ist. Dadurch ist es wiederum vorteilhaft möglich, auf zusätzliche Haltemittel zu verzichten.

Zur Halterung des Versorgungskabels sowie zur Zugentlastung ist am Tragteil ein Klemmteil befestigt. Die Halterung des Versorgungskabels am Tragteil ist dadurch besonders vorteilhaft dahingehend, dass das Klemmteil aus einem anderen Material als das Tragteil fertigbar ist. Durch diese separate Gestaltbarkeit des Klemmteils und des Tragteils ist es möglich diese beiden Teile jeweils vorrangig im Hinblick auf die jeweilige Funktion zu gestalten. In Hinblick auf das Klemmteil sind dadurch insbesondere solche Ausgestaltungen möglich, die eine besonders gute Fixierung des Versorgungskabels ermöglichen sowie eine geeignete Aufnahme mechanischer Belastungen. Das Tragteil ist insbesondere aufgrund der elektrischen Anbindung des Versorgungskabels aus einem leitenden Material beispielsweise Metall gefertigt. Das Klemmteil ist vorzugsweise aus ebenfalls aus Metall gefertigt, alternativ jedoch aus einem Kunststoff. Insbesondere umfasst das Klemmteil zwei Halbschalen, die zumindest eine Durchführung bilden in der das Versorgungskabel eingeklemmt ist oder einsitzt. Dadurch ist es dann insbesondere möglich, die Durchführungen besonders passgenau auszubilden und somit eine Fixierung des Versorgungskabels auf Basis einer Reibungskraft in der Durchführung zu erzielen. Eine nachteilige Quetschung des Versorgungskabels zur Halterung desselben ist vermeidbar.

Das Klemmteil ist beispielsweise am Tragteil festgeschraubt. Bezüglich des elektrischen Anschlusspunkts am Tragteil ist durch das Klemmteil dann ein geeigneter, vom Anschlusspunkt räumlich getrennter Haltepunkt für das Versorgungskabel geschaffen.

Das Tragteil weist zwei Schenkel auf und positioniert den Endverschluss sowie das Versorgungskabel in einem vorgegebenen Winkel zueinander, welcher insbesondere kein rechter Winkel ist. Dadurch ist es insbesondere möglich das Wagenübergangssystem geeignet auf den jeweiligen Einsatzbereich anzupassen. Der Winkel ist vorzugsweise größer als 90° und geringer als 180° und liegt besonders bevorzugt im Bereich von etwa 110 bis 160°. Dabei ist der Winkel insbesondere derjenige Winkel, welcher von der Kabellängsachse und einer Längs- oder Erstreckungsrichtung des Endverschlusses eingeschlossen ist. An dem einen Schenkel ist dabei das Klemmteil befestigt. Durch die winklige Ausgestaltung ist eine mechanisch besonders robuste Befestigung des Klemmteils ermöglicht. Durch die gewählten Winkel ist der eine Schenkel vorzugsweise in etwa parallel zu einer Ebene orientiert, die durch eine Spiralwindung des Spiralkabels definiert ist. Hierdurch ist eine einfache mechanische Entkopplung über das Klemmteil begünstigt.

Zur Befestigung des Klemmteils am Tragteil weist dieses daher vorzugsweiseeine vertikale Montagefläche auf, an welcher das Klemmteil befestigt ist und welche im Wesentlichen senkrecht zur Kabellängsachse des Versorgungskabels verläuft.

Darunter wird insbesondere verstanden, dass die Anordnung der Montagefläche um nicht mehr als etwa 10° von einer senkrechten Anordnung relativ zur Kabellängsachse abweicht. Dadurch bietet die Montagefläche eine besonders große Kontaktfläche für das Klemmteil und das Wagenübergangssystem ist besonders robust konstruiert. Die Montagefläche ist dabei insbesondere durch den einen Schenkel gebildet.

Auch das Klemmteil weist zweckmäßigerweise eine entsprechende vertikale Montagefläche auf, welche in befestigtem Zustand an der vertikalen Montagefläche des Tragteils anliegt. Die vertikale Montagefläche des Klemmteils wird insbesondere durch eine nach außen weisende Außenfläche einer der Halbschalen des Klemmteils gebildet. Dabei dient die Montagefläche des Klemmteils gerade nicht als Klemmfläche für das Versorgungskabel, sondern liegt vielmehr flächig am Tragteil an. Zur Halterung des Versorgungskabels weist das Klemmteil eine Anzahl von insbesondere mehreren zusätzlichen, separaten Klemmflächen auf. Bei einer Befestigung mittels einer Schraubverbindung erstrecken sich dann die Schrauben parallel zur Kabellängsrichtung und durch die beiden vertikalen Montageebenen hindurch.

Der Endverschluss ist zweckmäßigerweise am Tragteil über eine schräge Montagefläche des Tragteils befestigt, die von der vertikalen Montagefläche verschieden ist. Insbesondere sind die beiden Montageflächen des Tragteils jeweils ein Teil eines der oben beschriebenen Schenkel, sodass also die schräge und die vertikale Montagefläche ebenfalls in einem entsprechenden Winkel zueinander angeordnet sind, nämlich einem Winkel von 180° abzüglich des oben genannten Winkel zwischen der Kabellängsachse und der Längsachse des Endverschlusses.

Da das Tragteil starr ausgeführt ist, sind auch dessen schräge und vertikale Montagefläche starr zueinander angeordnet, d.h. in fest eingestelltem Winkel zueinander. Der Winkel wird dann insbesondere bei der Herstellung des Tragteils eingestellt, beispielsweise gemäß einer Kundenspezifikation, und nachfolgend nicht mehr verändert.

Die beiden Montageflächen erstrecken sich jeweils insbesondere gerade, flach und eben.

Die beiden Montageflächen und damit insbesondere die beiden Schenkel sind über eine Anzahl von Seitenteilen miteinander starr verbunden. Der Anschlusspunkt ist an einem der Seitenteile angeordnet und gerade nicht auf einer der Montageflächen, sodass jegliche mechanische Belastung an den Befestigungspunkten vom Endverschluss und vom Klemmteil vom Anschlusspunkt möglichst fern gehalten wird. Der elektrische Anschluss des Versorgungskabels erfolgt demnach an einem Seitenteil des Tragteils und gerade nicht im Bereich einer Montagefläche.

In einer ebenfalls geeigneten Variante verlaufen die beiden Montageflächen des Tragteils parallel zueinander und sind insbesondere eine Vorder- und eine Rückseite des Tragteils, insbesondere in einer Ausgestaltung als Blechteil sind die beiden Montageflächen dann auf gegenüberliegenden Seiten des Blechs angeordnet. Insgesamt ergibt sich in dieser Ausgestaltung eine besonders kompakte Bauform. Die Beiden Montageflächen des Tragteils sind dann insbesondere auch parallel zueinander angeordnet und insbesondere lediglich durch die Materialdicke voneinander beabstandet. Dabei sind, insbesondere entgegen der oben beschriebenen Variante, der Anschlusspunkt für das Versorgungskabel, der Befestigungspunkt für den Endverschluss sowie eventuelle Befestigungspunkte für das Klemmteil allesamt in einer gemeinsamen Ebene angeordnet, insbesondere innerhalb der Montageflächen. Diese Ausgestaltung eignet sich besonders für eine Anordnung, bei welcher die Längsachse des Endverschlusses parallel zur Kabellängsachse verläuft. An den Rändern der Montageflächen weist das Tragteil in einer Variante nichtsdestoweniger eine Anzahl von Seitenteilen auf, welche dann nicht zur Verbindung der Montageflächen dienen, sondern als seitliche Flügel abgeklappt oder abgekantet sind und so insbesondere bei einem Tragteil aus Blech zur mechanischen Stabilität beitragen.

Zur mechanischen Anbindung an einen der Wagen ist das Tragteil in einer zweckmäßigen Ausgestaltung lediglich mittels des Endverschlusses an den Wagen angebunden. Dabei ist das Tragteil selbst nicht mit dem Wagen mechanisch verbunden, sondern lediglich mittelbar über den Endverschluss. Mit anderen Worten: das Tragteil weist abgesehen vom Endverschluss keine weitere mechanische Anbindung an den entsprechenden Wagen auf. Die vom Versorgungskabel auf das Tragteil übertragene Krafteinwirkung wird somit an den Endverschluss weitergegeben. In dieser Ausgestaltung ist es vorteilhaft möglich auf eine separate und damit aufwendige mechanische Anbindung des Versorgungskabels an den Wagen, insbesondere mittels eines separaten Isolators zu verzichten. Das Wagenübergangssystem ist somit deutlich einfacher ausgebildet und insbesondere auch kostengünstiger in der Fertigung.

Vorzugsweise weist das Tragteil abgesehen vom Versorgungskabel auch keine mechanische Verbindung mit dem anderen der beiden Wagen auf. Das Versorgungskabel stellt somit bezüglich des Wagenübergangssystems die einzige mechanische Verbindung der beiden Wagen dar. Dadurch ist es insbesondere möglich, auf möglicherweise komplexe Verbindungsteile zu verzichten.

Der Endverschluss umfasst insbesondere einen Leiter mit einem Anschlusskontakt zur elektrischen Anbindung sowie ein den Leiter umgebendes Isolationsgehäuse. Der Anschlusskontakt umfasst hierbei zweckmäßigerweise einen Bolzen, der mit einem Außengewinde versehen ist. Vorzugsweise ist der Endverschluss zur Übertragung hoher Spannungen, beispielsweise im Kilovolt-Bereich ausgelegt und das Isolationsgehäuse ist entsprechen nach Art eines Isolators ausgeformt. Ein solcher Endverschluss ist auf Grund dessen üblicherweise starrer Konstruktion besonders auch zur Übertragung mechanischer Belastungen geeignet. Der Endverschluss erfüllt demnach vorteilhaft eine Doppelfunktion derart, dass dessen Leiter eine elektrische Verbindung zwischen Tragteil und elektrischen Komponenten des Wagens herstellt und gleichzeitig eine starre, mechanische Anbindung ermöglicht. Dabei erfolgt die Anbindung vorteilhaft über den Anschlusskontakt, insbesondere über den besonders stabilen Bolzen. Dazu ist der Anschlusskontakt am Tragteil befestigt und vorzugsweise mittels des Bolzens an das Tragteil angeschraubt.

Zugleich ist das Tragteil über den Anschlusskontakt insbesondere auch elektrisch mit dem Endverschluss verbunden. Im Betrieb erfolgt dann ein Stromfluss insbesondere vom Versorgungskabel über den Anschlusspunkt in das Tragteil und von dort in den Endverschluss und zum Wagen. Die in der Einleitung erwähnte direkte Anbindung des Versorgungskabels an den Endverschluss wird hierbei vermieden.

In einer bevorzugten Ausgestaltung ist das Versorgungskabel über einen an diesem befestigten Kabelschuh am Tragteil angeschraubt. Diese Form der Verbindung ist besonders kostengünstig und insbesondere dadurch ermöglicht, dass der Anschlusspunkt keine hohen mechanischen Anforderungen erfüllen muss. Daher ist es auch möglich, einen aus Kupfer gefertigten Kabelschuh zu verwenden, der üblicherweise nicht für mechanisch belastete Verbindungen verwendet wird, sich allerdings durch besonders gute elektrische Eigenschaften auszeichnet. Der Kabelschuh ist insbesondere am Kabelende des Versorgungskabels angebracht, beispielsweise angecrimpt. Vorzugsweise ist der Kabelschuh aufgepresst, beispielsweise mittels einer sechseckigen Außenkontur, wodurch sich insbesondere in radialer Richtung bezüglich des Leiters des Versorgungskabels eine besonders gleichmäßige Kraftverteilung bei Anpressen ergibt und dadurch eine besonders geeignete Haltewirkung erzielt wird. Der Anschluss am Tragteil erfolgt dann beispielsweise dadurch, dass durch den Kabelschuh hindurch eine Schraube in ein geeignetes Loch im Tragteil einschraubbar ist. Dabei ist das Loch beispielsweise ein einfaches Durchgangsloch und die Schraubverbindung eine besonders einfache und kostengünstige Schraube-Mutter-Verbindung.

Das Kabelende ist bevorzugt gebogen ausgeführt, wodurch sich das helixförmige Versorgungskabel besonders einfach am Tragteil anbringen lässt. Das Tragteil ist hierdurch besonders einfach ausführbar, das heißt insbesondere, dass keine zusätzlichen Ausleger oder Anschlussschienen an dieses angeformt oder an diesem befestigt sein müssen. Zudem erlaubt die gebogene Ausführung ein gewisses Spiel bei besonders starken Belastungen. Beispielsweise ist bei einem Verbiegen oder Brechen des Tragteils oder des Klemmteils zunächst weiterhin eine elektrische Verbindung gewährleistet.

In einer bevorzugten Weiterbildung ist das Wagenübergangssystem zur Führung mehrerer Versorgungskabel ausgebildet, insbesondere von zwei oder drei Versorgungskabeln, wobei jedes der mehreren Versorgungskabel am Tragteil elektrisch angeschlossen ist. Dadurch ist die übertragbare Leistung des Wagenübergangssystems auf besonders einfache Weise skalierbar. Anstelle eines mit zunehmendem Querschnitt schwieriger zu fertigendes Versorgungskabels werden dann mehrere Versorgungskabel mit im Vergleich dazu kleinerem Querschnitt verwendet. Die Ausführung mit mehreren Versorgungskabeln ist zudem bei der eingangs beschriebenen direkten Befestigung am Endverschluss nicht ohne Weiteres möglich, da hierbei die verschiedenen Versorgungskabel sich aufgrund der gemeinsamen Befestigung am Endverschluss gegenseitig behindern. Mit anderen Worten: die Führung der Versorgungskabel ist aufgrund des gemeinsamen Anschlusspunktes, der gleichzeitig auch die mechanische Anbindung darstellt erschwert. In der beschriebenen bevorzugten Weiterbildung sind die Versorgungskabel nicht am Anschlusspunkt, sondern anderswo am Tragteil gehaltert, insbesondere mittels des Klemmteils, wodurch eine Führung mehrerer Versorgungskabel deutlich vereinfacht wird. Vorteilhafterweise ist es dann möglich, gewundene Versorgungskabel zu verwenden, die insbesondere eine deutlich höhere Flexibilität aufweisen, als beispielsweise einfache, gerade Versorgungskabel. Daher sind in einer bevorzugten Ausgestaltung die mehreren Versorgungskabel jeweils als Spiralkabel ausgebildet, die sich helixartig um eine Kabellängsachse herum erstrecken.

Bei Verwendung mehrerer Versorgungskabel erstrecken sich diese geeigneterweise helixartig um eine gemeinsame Kabellängsachse herum. Daraus ergibt sich der Vorteil, dass ein sich möglicherweise lösendes oder abbrechendes Versorgungskabel durch zumindest eines der verbleibenden Versorgungskabel aufgefangen wird, das heißt am Herabfallen gehindert wird. Dadurch wird insbesondere die Sicherheit des Wagenübergangssystems verbessert.

Um insbesondere eine geeignete mechanische Verbindung zwischen dem Endverschluss und dem Tragteil sicher zu stellen, weist dieses eine Ausnehmung auf, in die der Endverschluss eingesetzt ist. Dabei ist der Endverschluss derart in das Tragteil eingesetzt, dass auch eine elektrische Verbindung vorliegt. Bei einem geeigneten Endverschluss ist dessen Leiter starr mit dem isolierenden Isolationsgehäuse des Endverschlusses verbunden. In dieser Ausführung braucht dann lediglich das entsprechende Leiterende in die Ausnehmung eingesetzt zu werden, um sowohl eine mechanische wie auch eine elektrische Verbindung herzustellen.

Zweckmäßigerweise ist die Ausnehmung im Tragteil mit einem Innengewinde versehen, in das der Endverschluss insbesondere mittels dessen Anschlusskontakts eingeschraubt ist, wobei der Anschlusskontakt geeigneterweise einen Bolzen mit einem Außengewinde umfasst. Alternativ oder zusätzlich ist auf dem Bolzen dann vorteilhafterweise eine Mutter aufgeschraubt, die dabei insbesondere eine Kontermutter ist.

In einer besonders kostengünstigen Ausgestaltung ist das Tragteil vorzugsweise aus Blech gefertigt, beispielsweise aus Stahl- oder Edelstahlblech. Ein solches Tragteil ist zudem besonders einfach herzustellen. Dabei wird beispielsweise eine geeignete Kontur aus einem Blech zurechtgeschnitten und anschließend derart gefalzt, dass geeignete Montageflächen zum Anbringen des Klemmteils sowie des Endverschlusses gebildet werden. Damit das Wagenübergangssystems insbesondere zur Verwendung im Bahnbereich geeignet ist und das Tragteil den dort möglicherweise auftretenden mechanischen Belastungen standhält, beträgt die Materialstärke des Blechs bevorzugt zwischen 4 mm und 10 mm. Der in die Ausnehmung eingesetzte Anschlusskontakt des Endverschlusses weist bevorzugterweise eine Länge auf, die größer ist als die Stärke des Blechs, beispielsweise etwa 30 mm, so dass der Anschlusskontakt durch die Ausnehmung im Trägerteil hindurchragt und eine Kontermutter aufschraubbar ist.

Zweckmäßigerweise ist das Tragteil einstückig ausgebildet, wodurch dieses mechanisch besonders stabil ist. Insbesondere wird hierbei auf zueinander bewegliche Teile verzichtet, die im Betrieb möglicherweise verschleißanfällig sind. Ein solches Tragteil ist dann besonders verschleiß- und wartungsarm.

In einer vorteilhaften Variante sind beide Kabelenden des Versorgungskabels in oben beschriebener Weise angeschlossen. Hierbei weist das Wagenübergangssystem daher zum Anschließen beider Kabelenden des Versorgungskabels für jedes dieser Kabelenden einen Endverschluss mit daran befestigtem Tragteil auf. Dadurch ist es dann insbesondere möglich, die oben beschriebenen Vorteile auf beiden Seiten des Wagenübergangssystems zu nutzen. Diese Ausgestaltung wird insbesondere auch als symmetrische Ausführung bezeichnet, im Gegensatz zu einer asymmetrischen Ausführung, bei der beispielsweise lediglich eine Seite des Wagenübergangssystems in herkömmlicherweise ausgebildet ist. Die beiden Tragteile sind insbesondere nicht unmittelbar miteinander mechanisch verbunden, sondern lediglich mittels des Versorgungskabels. Vorzugsweise weist das Wagenübergangssystem demnach kein die Trägerteile verbindendes Verbindungsteil auf, da ein solches im Betrieb möglicherweise zu einer Beschädigung des Versorgungskabels durch Reibung am Verbindungsteil führt.

Die oben gemachten Ausführungen sind insbesondere nicht auf den Eisenbahnbereich beschränkt, sondern gelten generell auch bei der Führung eines Versorgungskabels zwischen zwei relativ zueinander beweglichen Einheiten, beispielsweise bei Robotersystemen oder sonstigen Fertigungsmaschinen, bei denen ein beweglicher und ein stationärer Teil mittels eines Versorgungskabels miteinander verbunden sind. Die obigen Ausführungen sind daher insbesondere nicht als auf ein Wagenübergangssystem für den Bahnbereich beschränkt anzusehen.

Nachfolgend werden Ausführungsbeispiele der Erfindung anhand einer Zeichnung näher erläutert. Darin zeigen:
- Fig. 1: ein Wagenübergangssystem in einer Seitenansicht,
- Fig. 2: einen Ausschnitt der Anordnung in einer Aufsicht,
- Fig. 3: das Tragteil gemäß Fig. 1 mit daran angeschlossenem Versorgungskabel, und
- Fig. 4: das Tragteil gemäß Fig. 1 in einer Schrägansicht, und
- Fig. 5: eine alternative Ausgestaltung des Wagenübergangssystems.

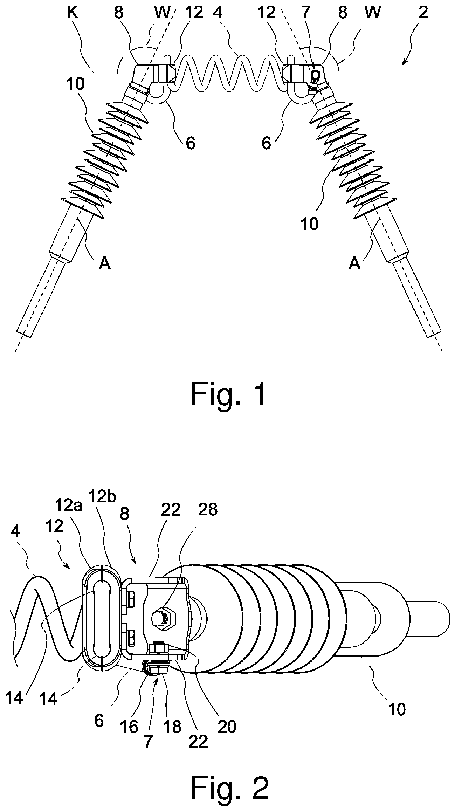

In Fig. 1 ist schematisch und in einer Seitenansicht ein Wagenübergangssystem 2 gezeigt. Dieses dient der Übertragung von elektrischer Leistung zwischen zwei hier nicht näher dargestellten Wagen eines ebenfalls nicht dargestellten Zuges. Die Übertragung erfolgt hierbei mittels eines Versorgungskabels 4, das hier als Spiralkabel oder auch Dachspirale ausgebildet ist und sich helixartig um eine Kabellängsachse K herum erstreckt. Die Kabelenden 6 des Versorgungskabels 4 sind jeweils an einem Anschlusspunkt 7 eines Tragteils 8 elektrisch angeschlossen. Mit diesen Tragteilen 8 ist zudem jeweils ein Endverschluss 10 verbunden, der jeweils eine mechanische sowie elektrische Anbindung an einen der Wagen darstellt. Das gezeigte Wagenübergangssystem 2 ist hier zudem symmetrisch ausgeführt.

Zur Fixierung des Versorgungskabels 4 ist an den Tragteilen 8 jeweils ein Klemmteil 12 befestigt. Aufgrund der Befestigung ist das Versorgungskabel 4 somit auch am Tragteil 8 gehaltert. Die Klemmteile 12 sind hier einander zugewandt angeordnet und das Versorgungskabel 4 erstreckt sich helixartig zwischen diesen. Die Fixierung durch die Klemmteile 12 wird besonders deutlich in Kombination mit Fig. 2. Diese zeigt in einer Aufsicht einen Ausschnitt der Anordnung gemäß Fig. 1. Deutlich erkennbar ist hier das am Tragteil 8 angeschraubte Klemmteil 12, das zur Fixierung des Versorgungskabels 4 dient. Dazu ist das Klemmteil 12 aus zwei Halbschalen 12a, 12b gefertigt, die in verbundenem Zustand zwei Durchführungen 14 ausbilden, durch die das Versorgungskabel 4 hindurch geführt ist. In der hier gezeigten Ausführung läuft das Versorgungskabel 4 jeweils senkrecht zur Kabellängsachse K in das jeweilige Klemmteil 12 ein. Die Durchführungen 14 stellen dabei insbesondere Haltepunkte dar, an denen das Versorgungskabel 4 festgehalten ist, wodurch eine mögliche mechanische Belastung desselben auf das Klemmteil 12 übertragen wird. Das Kabelende 6 erfährt dann keine oder lediglich eine geringe mechanische Belastung. Das Kabelende 6 ist dann am Tragteil 8 in dem hier gezeigten Ausführungsbeispiel mittels eines auf das Versorgungskabel 4 aufgepressten Kabelschuhs 16 angebracht, der am Tragteil 8 mittels einer Schraube 18 und einer Mutter 20 befestigt ist.

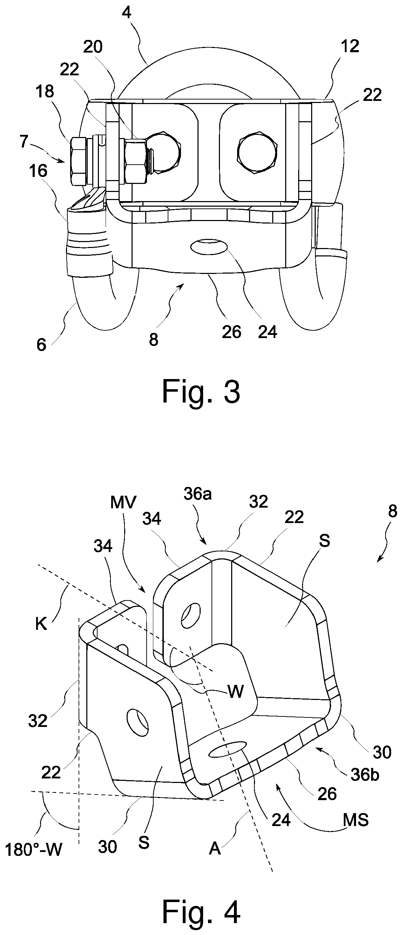

Besonders deutlich ist dies in der Fig. 3 zu sehen, welche die Anordnung der Fig. 2 ohne den Endverschluss 10 in einer Rückansicht zeigt. Die Schraube 18 sitzt im Kabelschuh 16 und in einem Flügel 22 des Tragteils 8 ein und ist mit der Mutter 20 gekontert. Deutlich sichtbar ist hier auch eine Ausnehmung 24 in einem Mittelteil 26 des Tragteils 8. Diese Ausnehmung 24 dient insbesondere der Halterung des Endverschlusses 10. Dazu ist der Endverschluss 10, wie in Fig. 2 gezeigt, mit einem elektrischen Anschlusskontakt 28 in die Ausnehmung 24 eingesetzt. In dem hier gezeigten Ausführungsbeispiel umfasst der Anschlusskontakt 28 einen Bolzen oder auch Zapfen, der mit einem Außengewinde versehen ist und in die als Durchgangsloch ausgeführte Ausnehmung 24 eingesetzt ist. Zur Befestigung ist dann eine Kontermutter auf den Bolzen aufgeschraubt. Das Versorgungskabel 4 ist hier insbesondere nicht direkt mit dem Anschlusskontakt 28 elektrisch verbunden, sondern lediglich mittelbar über das Tragteil 8.

Die Fig. 4 zeigt das Tragteil 8 in einer Schrägansicht. In dem hier gezeigten Ausführungsbeispiel ist das Tragteil 8 einstückig und aus einem Blech gefertigt. Dazu wird zunächst eine geeignete Kontur aus einem flachen Blech zurechtgeschnitten und diese anschließend mittels geeigneter Kantungen 30, 32 in die endgültige Form gebracht. Zunächst wird hierbei mittels der Kantungen 32 jeweils ein Montageflügel 34 abgeknickt und anschließend werden über die Kantungen 30 vom Mittelteil 26 ausgehen die Flügel 22 als Seitenteile S abgeknickt. Die beiden Montageflügel 34 bilden dann eine vertikale Montagefläche MV aus, die im Wesentlichen senkrecht zur Kabellängsachse K verläuft und über die dann insbesondere eine Montage des Klemmteils 12 erfolgt. Der Endverschluss 10 wird dagegen am Mittelteil 26 befestigt, welches entsprechend eine schräge Montagefläche MS ausbildet. Die Ausnehmung 24 ist dazu insbesondere als Durchgangsloch ausgeführt, so dass der Endverschluss 10 an das Tragteil 8 anschraubbar ist.

Das Tragteil 8 umfasst zwei Schenkel 36a, 36b, die in einem Winkel W zueinander angeordnet sind. In dem hier gezeigten Ausführungsbeispiel sind zur Ausbildung der Schenkel 36a, 36b die Kantungen 30, 32 entsprechend gewinkelt zueinander ausgeführt und schließen insbesondere einen Winkel 180°-W ein. Dadurch sind insbesondere auch die schräge Montagefläche MS und die vertikale Montagefläche MV, d.h. die Montageflügel 34 bezüglich des Mittelteils 26 in einem Winkel 180°-W angeordnet, der sich entsprechend als Differenz aus einem Halbwinkel von 180° und dem oben beschriebenen Winkel W ergibt. Besonders in Kombination mit Fig. 1 wird deutlich, dass dann die Endverschlüsse 10 bezüglich des Verlaufs des Versorgungskabels 4 gewinkelt angeordnet sind. Insbesondere erstrecken sich die Endverschlüsse 10 jeweils entlang einer Achse A, die dann mit der Kabellängsachse K den Winkel W einschließt. In der hier gezeigten Ausführung beträgt der Winkel W etwa 120°. Die gewinkelt zueinander angeordneten beiden Montageflächen MS, MV sind dann über die Seitenteile S starr miteinander verbunden. An einem der Seitenteile S ist dann der Anschlusspunkt 7 angeordnet.

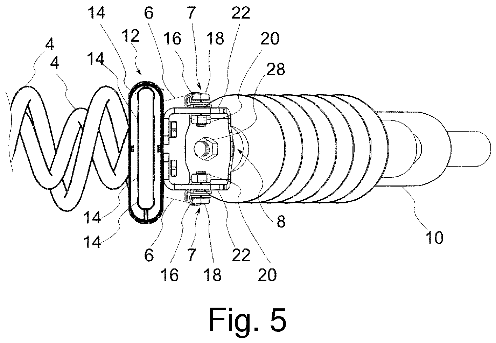

In Fig. 5 ist eine alternative Ausgestaltung der Anordnung gemäß Fig. 2 gezeigt, bei der das Wagenübergangssystem 2 zur Führung von mehreren, hier zwei Versorgungskabeln 4 ausgebildet ist. Entsprechend weist das Klemmteil 12 hier vier Durchführungen 14 auf und das Tragteil 8 zwei Anschlussstellen 7 zum elektrischen Anschluss der Versorgungskabel 4. Zudem ist das eine der Versorgungskabel 4 innerhalb des anderen der Versorgungskabel 4 angeordnet, wodurch sich in Kombination mit dem helixartigen Verlauf eine Sicherung gegen Herabfallen eines der Versorgungskabel 4 derart ergibt, dass dieses in diesem Fall durch die Windungen des anderen Versorgungskabels 4 aufgefangen wird.

### Bezugszeichenliste

- 2: Wagenübergangssystem
- 4: Versorgungskabels
- 6: Kabelende (des Versorgungskabels)
- 7: Anschlusspunkt
- 8: Tragteil
- 10: Endverschluss
- 12: Klemmteil
- 12a, 12b: Halbschale
- 14: Durchführung
- 16: Kabelschuh
- 18: Schraube
- 20: Mutter
- 22: Flügel
- 24: Ausnehmung
- 26: Mittelteil
- 28: Anschlusskontakt
- 30, 32: Kantung
- 34: Montageflügel
- 36a, 36b: Schenkel

- A: Achse
- K: Kabellängsachse
- MS: schräge Montagefläche
- MV: vertikale Montagefläche
- S: Seitenteil
- W: Winkel

## Patentansprüche

1. Wagenübergangssystem (2) zur Führung wenigstens eines Versorgungskabels (4) zwischen zwei Wagen, mit einem Versorgungskabel (4), mit einem Endverschluss (10) und mit einem Tragteil (8), zur Halterung des Versorgungskabels (4),
wobei das Tragteil (8) einen separaten Anschlusspunkt (7) aufweist, an dem das Versorgungskabel (4) elektrisch angeschlossen ist,
wobei das Tragteil (8) an dem Endverschluss (10) befestigt ist, zur elektrischen und mechanischen Anbindung an einen der Wagen,
wobei das Versorgungskabel (4) als Spiralkabel ausgebildet ist und sich helixartig um eine Kabellängsachse (K) herum erstreckt,
wobei das Tragteil (8) starr ist und am Tragteil (8) ein Klemmteil (12) befestigt ist, zur Zugentlastung und mechanischen Halterung des Versorgungskabels (4),
wobei das Tragteil (8) zwei Schenkel (36a, 36b) aufweist und den Endverschluss (10) sowie das Versorgungskabel (4) in einem vorgegebenen Winkel (W) zueinander positioniert, und
wobei die beiden Schenkel (36a, 36b) über eine Anzahl von Seitenteilen (S) miteinander starr verbunden sind und der Anschlusspunkt (7) an einem der Seitenteile (S) angeordnet ist.

2. Wagenübergangssystem (2) nach dem vorhergehenden Anspruch,
**dadurch gekennzeichnet,**
**dass** Tragteil (8) eine vertikale Montagefläche (MV) aufweist, an welcher das Klemmteil (12) befestigt ist und welche im Wesentlichen senkrecht zu einer Kabellängsachse (K) des Versorgungskabels (4) verläuft.

3. Wagenübergangssystem (2) nach dem vorhergehenden Anspruch,
**dadurch gekennzeichnet,**
**dass** der Endverschluss (10) am Tragteil (8) über eine schräge Montagefläche (MS) des Tragteils (8) befestigt ist, wobei die schräge Montagefläche (MS) bezüglich der vertikalen Montagefläche (MV) in einem Winkel (180°-W) angeordnet ist.

4. Wagenübergangssystem (2) nach einem der vorhergehenden Ansprüche,
**dadurch gekennzeichnet,**
**dass** zur mechanischen Anbindung an einen der Wagen das Tragteil (8) lediglich mittels des Endverschlusses (10) an den Wagen angebunden ist.

5. Wagenübergangssystem (2) nach einem der vorhergehenden Ansprüche,
**dadurch gekennzeichnet,**
**dass** das Versorgungskabel (4) über einen an diesem befestigten Kabelschuh (16) am Tragteil (8) angeschraubt ist.

6. Wagenübergangssystem (2) nach einem der vorhergehenden Ansprüche,
**dadurch gekennzeichnet,**
**dass** das Versorgungskabel (4) ein Kabelende (6) aufweist und das Kabelende (6) gebogen ausgeführt ist.

7. Wagenübergangssystem (2) nach einem der vorhergehenden Ansprüche,
**dadurch gekennzeichnet,**
**dass** dieses zur Führung mehrerer Versorgungskabel (4) ausgebildet ist, wobei jedes der mehreren Versorgungskabel (4) am Tragteil (8) elektrisch angeschlossen ist.

8. Wagenübergangssystem (2) nach dem vorhergehenden Anspruch,
**dadurch gekennzeichnet,**
**dass** die mehreren Versorgungskabel (4) an zumindest einem Anschlusspunkt (7) lediglich elektrisch mit dem Tragteil (8) verbunden sind und anderswo an diesem gehaltert, insbesondere mittels eines Klemmteils (12).

9. Wagenübergangssystem (2) nach einem der beiden vorhergehenden Ansprüche,
**dadurch gekennzeichnet,**
**dass** die mehreren Versorgungskabel (4) sich helixartig um eine gemeinsame Kabellängsachse (K) herum erstrecken.

10. Wagenübergangssystem (2) nach einem der vorhergehenden Ansprüche,
**dadurch gekennzeichnet,**
**dass** das Tragteil (8) eine Ausnehmung (24) aufweist, in die der Endverschluss (10) eingesetzt ist.

11. Wagenübergangssystem (2) nach einem der vorhergehenden Ansprüche,
**dadurch gekennzeichnet,**
**dass** das Tragteil (8) aus Blech gefertigt ist.

12. Wagenübergangssystem (2) nach einem der vorhergehenden Ansprüche,
**dadurch gekennzeichnet,**
**dass** das Tragteil (8) einstückig ausgebildet ist.

13. Wagenübergangssystem (2) nach einem der vorhergehenden Ansprüche,
**dadurch gekennzeichnet,**
**dass** dieses zum Anschließen zweier Kabelenden (6) des Versorgungskabels (4) für jedes dieser Kabelenden (6) einen Endverschluss (10) mit daran befestigtem Tragteil (8) aufweist.

## Claims

1. Wagon transfer system (2) for guiding at least one supply cable (4) between two wagons, with a supply cable (4), with an cable termination (10) and with a supporting part (8) for holding the supply cable (4),
wherein the supporting part (8) has a separate connection point (7), to which the supply cable (4) is electrically connected,
wherein the supporting part (8) is fastened to the cable termination (10) for electrical and mechanical connection to one of the wagons,
wherein the supply cable (4) is designed as a spiral cable and extends in a helical manner around a longitudinal cable axis (K),
wherein the supporting part (8) is rigid and a clamping part (12) is fastened to the supporting part (8) for strain relief and mechanical retention of the supply cable (4),
wherein the supporting part (8) has two legs (36a, 36b) and positions the cable termination (10) and the supply cable (4) at a predetermined angle (W) to one another, and
wherein the two legs (36a, 36b) are rigidly connected to each other via a number of side parts (S) and the connection point (7) is disposed at one of the side parts (S).

2. Wagon transfer system (2) according to the preceding claim,
**characterized in**
**that** the supporting part (8) has a vertical mounting surface (MV), to which the clamping part (12) is fastened and which runs essentially perpendicular to a longitudinal cable axis (K) of the supply cable (4).

3. Wagon transfer system (2) according to the preceding claim,
**characterized in**
**that** the cable termination (10) is fastened to the supporting part (8) via an inclined mounting surface (MS) of the supporting part (8), wherein the inclined mounting surface (MS) is disposed at an angle (180°-W) with respect to the vertical mounting surface (MV).

4. Wagon transfer system (2) according to one of the preceding claims,
**characterized in**
**that**, for mechanical connection to one of the wagons, the supporting part (8) is connected to the wagon only by means of the cable termination (10).

5. Wagon transfer system (2) according to one of the preceding claims,
**characterized in**
**that** the supply cable (4) is screwed to the supporting part (8) via a cable shoe (16) fastened thereto.

6. Wagon transfer system (2) according to one of the preceding claims,
**characterized in**
**that** the supply cable (4) has a cable end (6) and the cable end (6) is designed in a bent manner.

7. Wagon transfer system (2) according to one of the preceding claims,
**characterized in**
**that** the latter is designed to guide a plurality of supply cables (4), wherein each of the plurality of supply cables (4) is electrically connected to the supporting part (8).

8. Wagon transfer system (2) according to the preceding claim,
**characterized in**
**that** the plurality of supply cables (4) are connected to the supporting part (8) in a purely electrical manner at at least one connection point (7) and are held thereon elsewhere, in particular by means of a clamping part (12).

9. Wagon transfer system (2) according to one of the two preceding claims,
**characterized in**
**that** the plurality of supply cables (4) extend in a helical manners around a common longitudinal cable axis (K).

10. Wagon transfer system (2) according to one of the preceding claims,
**characterized in**
**that** the supporting part (8) has a recess (24), into which the cable termination (10) is inserted.

11. Wagon transfer system (2) according to one of the preceding claims,
**characterized in**
**that** the supporting part (8) is manufactured of sheet metal.

12. Wagon transfer system (2) according to one of the preceding claims,
**characterized in**
**that** the supporting part (8) is formed in one piece.

13. Wagon transfer system (2) according to one of the preceding claims,
**characterized in**
**that**, for connecting two cable ends (6) of the supply cable (4), said wagon transfer system (2) has, for each of these cable ends (6), an cable termination (10) with a supporting part (8) attached to it.

## Revendications

1. Système de transfert de chariots (2) pour guider au moins un câble
d'alimentation (4) entre deux chariots, avec un câble d'alimentation (4), avec une fermeture de câble (10) et avec une partie de support (8) pour maintenir le câble d'alimentation (4),
dans lequel la partie de support (8) a un point de connexion séparé (7), auquel le câble d'alimentation (4) est connecté électriquement,
dans lequel la partie de support (8) est fixée à la fermeture de câble (10) pour une connexion électrique et mécanique à l'un des chariots,
dans lequel le câble d'alimentation (4) est conçu comme un câble en spirale et s'étend de manière hélicoïdale autour d'un axe longitudinal de câble (K),
dans lequel la partie de support (8) est rigide et une partie de serrage (12) est fixée à la partie de support (8) pour la décharge de traction et la rétention mécanique du câble d'alimentation (4),
dans lequel la partie de support (8) a deux branches (36a, 36b) et positionne la fermeture de câble (10) et le câble d'alimentation (4) selon un angle prédéterminé (W) l'un par rapport à l'autre, et
dans lequel les deux branches (36a, 36b) sont reliées rigidement l'une à l'autre par un certain nombre de parties latérales (S) et le point de connexion (7) est disposé sur l'une des parties latérales (S).

2. Système de transfert de chariots (2) selon la revendication précédente,
**caractérisé en ce**
**que** la partie support (8) comprend une surface de montage verticale (MV), sur laquelle est fixée la partie de serrage (12) et qui s'étend essentiellement perpendiculairement à un axe longitudinal (K) du câble d'alimentation (4).

3. Système de transfert de chariots (2) selon la revendication précédente,
**caractérisé en ce**
**que** la fermeture de câble (10) est fixée à la partie de support (8) par l'intermédiaire d'une surface de montage inclinée (MS) de la partie de support (8), dans lequel la surface de montage inclinée (MS) est disposée selon un angle (180°-W) par rapport à la surface de montage verticale (MV).

4. Système de transfert de chariots (2) selon l'une des revendications précédentes,
**caractérisé en ce**
**que**, pour la connexion mécanique à l'un des chariots, la partie support (8) n'est reliée au chariot qu'au moyen de la fermeture de câble (10).

5. Système de transfert de chariots (2) selon l'une des revendications précédentes,
**caractérisé en ce**
**que** le câble d'alimentation (4) est vissé à la partie support (8) par l'intermédiaire d'une cosse de câble (16) fixée sur celle-ci.

6. Système de transfert de chariots (2) selon l'une des revendications précédentes,
**caractérisé en ce**
**que** le câble d'alimentation (4) a une extrémité de câble (6) et l'extrémité de câble (6) est coudée.

7. Système de transfert de chariots (2) selon l'une des revendications précédentes,
**caractérisé en ce**
**que** ce dernier est conçu pour guider une pluralité de câbles d'alimentation (4), dans lequel chacun de la pluralité de câbles d'alimentation (4) est connecté électriquement à la partie de support (8).

8. Système de transfert de chariots (2) selon la revendication précédente,
**caractérisé en ce**
**que** la pluralité de câbles d'alimentation (4) ne sont reliées qu'électriquement à la partie de support (8) au niveau d'au moins un point de connexion (7) et y est maintenue ailleurs, en particulier au moyen d'une pièce de serrage (12).

9. Système de transfert de chariots (2) selon l'une des deux revendications précédentes,
**caractérisé en ce**
**que** la pluralité de câbles d'alimentation (4) s'étendent de manière hélicoïdale autour d'un axe de câble longitudinal commun (K).

10. Système de transfert de chariots (2) selon l'une des revendications précédentes,
**caractérisé en ce**
**que** la partie de support (8) a un évidement (24) dans lequel est insérée la fermeture de câble (10).

11. Système de transfert de chariots (2) selon l'une des revendications précédentes,
**caractérisé en ce**
**que** la pièce de support (8) est fabriquée en tôle.

12. Système de transfert de chariots (2) selon l'une des revendications précédentes,
**caractérisé en ce**
**que** la partie support (8) est formée d'une seule pièce.

13. Système de transfert de chariots (2) selon l'une des revendications précédentes,
**caractérisé en ce**
**que**, pour la connexion de deux extrémités de câble (6) du câble d'alimentation (4), ledit système de transfert de chariots (2) comprend, pour chacune de ces extrémités de câble (6), une fermeture de câble (10) avec une partie de support (8) fixée sur celle-ci.
